# EUROPÄISCHE PATENTSCHRIFT

(11) **EP 2 391 522 B1**
(45) Veröffentlichungstag und Bekanntmachung des Hinweises auf die Patenterteilung: **07.07.2021**
(21) Anmeldenummer: 10703704.6
(22) Anmeldetag: 29.01.2010
(51) Int. Cl.: H02M 3/335, H02M 7/219, H02M 1/10, H02M 7/06

(54) **DC/DC-Wandler und AC/DC-WANDLER**
DC/DC CONVERTER AND AC/DC CONVERTER
CONVERTISSEUR CC/CC ET CONVERTISSEUR CA/CC

(30) Priorität: 29.01.2009 CH 1362009; 29.01.2009 US 148377 P; 08.07.2009 CH 10592009
(43) Veröffentlichungstag der Anmeldung: 07.12.2011
(73) Patentinhaber: Brusa Elektronik AG, 9466 Sennwald (CH)
(72) Erfinder: KRAUSE, Axel, CH-9650 Nesslau (CH)
(74) Vertreter: Rösler, Frank
(86) Internationale Anmeldenummer: PCT/IB2010/050401
(87) Internationale Veröffentlichungsnummer: WO 2010/086823

(56) Entgegenhaltungen:
- EP-A- 1 227 571
- EP-A2- 1 258 978
- US-A- 4 695 933
- US-A1- 2002 001 210
- US-A1- 2008 192 510
- PINHEIRO J R ET AL: "Isolated interleaved-phase-shift-PWM de-dc ZVs converters" INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 4, 8. Oktober 2000 (2000-10-08), Seiten 2383-2388, XP010522589 ISBN: 978-0-7803-6401-1
- STEIGERWALD R L ET AL: "A comparison of high power DC-to-DC soft-switched converter topologies" INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE LNKD- DOI:10.1109/IAS.1994.377564, 2. Oktober 1994 (1994-10-02), Seiten 1090-1096, XP010124216 ISBN: 978-0-7803-1993-6

## Beschreibung

Die Erfindung betrifft einen DC/DC-Wandler mit mehreren parallel oder in Serie geschalteten zweipoligen Wechselrichtern, ebenso vielen Transformatoren und ebenso vielen parallel oder in Serie geschalteten zweipoligen Gleichrichtern. Dabei ist je ein Wechselrichter mit einer Primärseite je eines Transformators und je ein Gleichrichter mit einer Sekundärseite je eines Transformators verbunden. Weiterhin sind die Wechselrichter mit einer Steuerung verbunden, welche zur frequenzsynchronen und um 180°/n phasenversetzten Ansteuerung der Wechselrichter mit Hilfe eines Steuersignals vorgesehen ist, wobei n die Anzahl der Transformatoren angibt. Darüber hinaus betrifft die Erfindung einen AC/DC-Wandler.

Ein DC/DC-Wandler (auch "Gleichstromsteller") wandelt eine konstante Eingangsspannung durch periodisches Schalten um, so dass am Ausgang im arithmetischen Mittel ein anderer Spannungswert entsteht. Die Grundtypen sind Tiefsetzsteller (Ausgangsspannung kleiner als die Eingangsspannung), Hochsetzsteller (Ausgangsspannung größer als die Eingangsspannung) und Inverter (Ausgangsspannung hat gegenüber der Eingangsspannung ein negatives Vorzeichen).

Ein AC/DC-Wandler wandelt eine eingangsseitige Wechselspannung in eine ausgangsseitige Gleichspannung um, wobei die Gleichspannung in der Regel vom Effektivwert der Wechselspannung abweicht. Weit verbreitet sind AC/DC-Wandler in Form von Netzteilen, welche zum Beispiel die Versorgung von elektronischen Geräten an einem Wechselspannungsnetz ermöglichen. Darüber hinaus kommen AC/DC-Wandler in Form von Gleichrichtern vor.

Als weiteres Beispiel für einen Wandler wird die DE 100 51 156 A1 genannt, welche eine Umrichterschaltung zur mittelfrequenten transformatorischen Energieübertragung mittels eines primär- und sekundärseitig mit leistungselektronischen Stromrichtern verbundenen Transformators zeigt. Dabei werden mindestens zwei voneinander unabhängig steuerbare, mit jeweils einer Teilwicklung eines einkernigen Transformators verbundene Stromrichter abwechselnd getaktet, wobei sie entweder nacheinander bipolare Spannungspulse oder abwechselnd unipolare Spannungspulse entgegengesetzter Polarität erzeugen, um zum Beispiel die Leistungsdichte des Transformators zu erhöhen.

Die EP 1 227 571 A2 offenbart weiterhin einen DC/DC-Wandler mit Konverterteilen, Transformatoren und Gleichrichterteilen. Zwei Sätze von Konverterteilen umfassen zwei Paare von ersten Schaltelementen und zwei weitere Paare von zweiten Schaltelementen, welche in Vollbrücken-Konfiguration verbunden sind. Zwischen den Konverterteilen und den Transformatoren sind Serienkondensatoren angeordnet. Die Schaltpunkte der ersten Schaltelemente sind gegenüber den Schaltpunkten der zweiten Schaltelementen um 1/3n Periode phasenverschoben. Die Schaltpunkte der Schaltelemente der Konverterteile sind dagegen untereinander um 1/2n Perioden phasenverschoben.

Die EP 1 391 982 A2 offenbart schliesslich eine Schaltung mit einem Paar von Konverterschaltungsteilen für die Umwandlung einer Versorgungsspannung einer Gleichspannungsquelle in eine Wechselspannung. Dies erfolgt durch zwei Paar von Schaltelementen in Vollbrückenkonfiguration, welche parallel zur Gleichspannungsquelle und einem Gleichrichterteil angeordnet sind und über Transformatoren an die Ausgänge eines jeden Konverterschaltungsteils geführt werden. Zwischen den Konverterschaltungsteilen und den Transformatoren sind Serienkondensatoren als Glättungseinheit angeordnet. Die Sekundärseiten der Transformatoren eines Gleichrichterteils jeder dieser Glättungseinheiten sind in N Gruppen von Glättungseinheiten in Serie verschalten. Weiterhin sind auch die Sekundärseiten der anderen Gleichrichterteile in den N Gruppen von Glättungseinheiten in Serie verschalten.

DC/DC-Wandler sind in fast allen Bereichen der Technik zu finden, beispielsweise in der Kraftfahrzeug-Technik, wenn die Bordspannung von typischerweise 12 Volt in eine andere Gleichspannung gewandelt werden soll, bei batteriebetriebenen Geräten, wenn die Batterie- oder Akkuspannung ungleich der von der elektronischen Schaltung benötigten Spannung ist, oder auch in der elektrischen Antriebstechnik.

Nicht zuletzt werden DC/DC-Wandler auch in Kombination mit einer AC/DC-Stufe eingesetzt, wobei eine Wechselspannung (in Europa typisch 230 V AC) in eine Zwischenkreisspannung (Gleichspannung) gewandelt und diese Zwischenkreisspannung, die oft nicht beliebig hoch oder tief erzeugt werden kann, anschließend mit einem DC/DC-Wandler auf ein gewünschtes Niveau gebracht wird.

Ein wichtiges Anwendungsgebiet von AC/DC-Wandlern ist unter anderem auch das Laden von Batterien beziehungsweise Akkumulatoren am Stromnetz, das wegen der stetig steigenden Mobilität der Menschen und dem damit verbundenen Betrieb mobiler elektrischer und elektronischer Geräte immer wichtiger wird. Nicht zuletzt stellen auch elektrisch angetriebene Kraftfahrzeuge völlig neue Anforderungen an Batterie-Ladegeräte, denn einerseits soll das Laden sowohl am (im Haushalt gebräuchlichen) Einphasennetz, wegen der grösseren Leistungsdichte und dadurch rascheren Ladung andererseits aber auch am Dreiphasennetz möglich sein. Damit einher gehen Unterschiede in der Netzspannung (in Europa 230 V AC im Einphasennetz und 400 V AC im Dreiphasennetz), die - weil ja die Batteriespannung konstant ist - schaltungstechnisch berücksichtigt werden müssen. Weiterhin soll ein vergleichsweise hoher Energieinhalt (der letztlich die Reichweite des Fahrzeuges bestimmt) in möglichst kurzer Zeit aus dem Stromnetz in die Batterie transferiert werden.

Die zum Teil erhebliche Leistung der DC/DC-Wandler und/oder AC/DC-Wandler führt bei herkömmlicher Bauart leider häufig zu vergleichsweise hohen Leistungs-Rippel an der Last (z.B. Batterie). Problematisch können aber auch die Rückwirkungen auf die Versorgungsseite, also zum Beispiel in das versorgende Stromnetz sein. Solche Rückwirkungen können beispielsweise bei transienten Vorgängen auftreten, welche etwa durch Schaltvorgänge oder nichtlineare Verbraucher, insbesondere durch Bauteile der Leistungselektronik wie etwa Transistoren und Thyristoren, bedingt sind.

Aufgabe der Erfindung ist es nun, einen DC/DC-Wandler und/oder AC/DC-Wandler anzugeben, bei welchem Leistungs-Rippel an einer an den Wandler angeschlossenen Last und/oder versorgungsseitige Rückwirkungen verringert werden.

Erfindungsgemäss wird diese Aufgabe durch einen DC/DC-Wandler mit den Merkmalen des Patentanspruchs 1 und einen AC/DC-Wandler mit den Merkmalen des Patentanspruchs 6 gelöst.

Demgemäss umfasst ein erfindungsgemässer DC/DC-Wandler der eingangs genannten Art zusätzlich das Merkmal, dass Streuinduktivitäten der Transformatoren mit Kondensatoren der Wechselrichter und/oder Kondensatoren der Gleichrichter jeweils einen Schwingkreis bilden, dessen Resonanzfrequenz im Wesentlichen doppelt so gross wie eine Taktfrequenz des Steuersignals ist.

Demgemäss umfasst ein erfindungsgemässer AC/DC-Wandler einen erfindungsgemässen DC/DC-Wandler, welcher versorgungsseitig eine AC/DC-Stufe aufweist.

Durch diese Schaltung werden - wie später gezeigt werden wird - lastseitige Leistungs-Rippel und/oder versorgungsseitige Rückwirkungen (z.B. Netzrückwirkungen) effektiv reduziert. Die erfindungsgemässen Wandler eignen sich daher insbesondere für die eingangs genannten Zwecke, deren Anwendung ist aber keinesfalls auf diese Bereiche eingeschränkt. Wegen der verringerten Netzrückwirkungen lassen sich so insbesondere sehr leistungsstarke Batterie-Ladegeräte (z.B. für Elektrokraftfahrzeuge) realisieren, bei denen dennoch Leistungs-Rippel an der Last - wenn nicht vermieden - wenigstens verringert und die Vorschriften der Energieversorgungsunternehmen hinsichtlich der maximalen Netzrückwirkungen erfüllt werden.

Erfindungsgemäss ergeben sich an den Kondensatoren einer Gleichspannung überlagerte sinusförmige Wechselspannungen, welche um 180° phasenverschoben sind. Daraus ergibt sich der Vorteil, dass die Umschaltung der Gleich- bzw. Wechselrichter im Nulldurchgang des Stromes erfolgt, was die Schaltverluste praktisch eliminiert und die elektromagnetischen Störungen auf ein Minimum reduziert. Bei Serienschaltung der Wechselrichter beziehungsweise Gleichrichter kompensieren sich die phasenverschobenen Wechselspannungen womit eine praktisch rippelfreie Gleichspannung resultiert. Der Begriff "im Wesentlichen" definiert sich in diesem Zusammenhang an der ingenieurmässig tolerierbaren Höhe einer der Gleichspannung überlagerten Wechselspannung. Sollte die Streuinduktivität der Transformatoren zu klein sein, kann sie natürlich durch eine zusätzliche Spule in Serie zur Primär-oder Sekundärwicklung auf den gewünschten Wert vergrössert werden.

An dieser Stelle wird darauf hingewiesen, dass für die Resonanz die Parallelschaltung aus der Streu- und Hauptinduktivität der Transformatoren massgebend ist. Da die Hauptinduktivität bei den meisten Anwendungen aber etwa 100-mal größer ist als die Streuinduktivität, ist die parallel zur Streuinduktivität wirkende Hauptinduktivität in der Praxis meistens vernachlässigbar. Sollten die tatsächlichen Verhältnisse aber massgeblich von den oben geschilderten abweichen, so kann aber auch eine Berücksichtigung der Hauptinduktivität angezeigt sein.

Weiterhin wird darauf hingewiesen, dass unter einem "Umrichter" im Rahmen der Offenbarung ein Gleichrichter, ein Wechselrichter oder ein bidirektionaler Umrichter verstanden werden kann. Unter einem "gleichrichtenden Element" kann beispielsweise eine Diode, ein Transistor (z.B. ein MOSFET oder ein IGBT), ein Thyristor oder ein anderes gleichrichtendes Element verstanden werden. Weiterhin kann unter einem "Schaltelement" beispielsweise ein Transistor (z.B. wiederum ein MOSFET oder ein IGBT), ein Thyristor oder ein anderes schaltendes Element verstanden werden. Entsprechend ergeben sich passive Gleichrichter, aktive Gleichrichter oder aktive Wechselrichter. Schliesslich sind unter "Batterien" aufladbare Batterien, Akkumulatoren oder andere stromspeichernde Medien zu verstehen. Vorteilhafte Ausgestaltungen und Weiterbildungen der Erfindung ergeben sich aus den Unteransprüchen sowie aus der Beschreibung in Zusammenschau mit den Figuren der Zeichnung.

Vorteilhaft ist es, wenn der DC/DC-Wandler zwei Wechselrichter, zwei Transformatoren und zwei Gleichrichter aufweist, da auf diese Weise ein vergleichsweise einfacher Aufbau gegeben ist.

Vorteilhaft ist es auch, wenn die Transformatoren getrennte Kerne aufweisen, da auf diese Weise eine gegenseitige Beeinflussung derselben mehr oder minder ausgeschlossen werden kann.

Gemäß der Erfindung sind je einem Wechselrichter je ein Kondensator und/oder je einem Gleichrichter je ein Kondensator parallel geschaltet. Auf diese Weise können Leistungs-Rippel und/oder Rückwirkungen auf die Versorgungsseite besonders gut vermindert werden, da die bereits an sich vergleichsweise glatte Gleichspannung noch weiter geglättet wird.

Günstig ist es weiterhin, wenn den Wechselrichtern ein gemeinsamer Kondensator und/oder den Gleichrichtern ein gemeinsamer Kondensator parallel geschaltet ist. Auch diese Variante, die allerdings nicht unter die Erfindung fällt, die durch die Ansprüche definiert ist, sorgt für eine besonders gute Verringerung von Leistungs-Rippeln und/oder Rückwirkungen auf die Versorgungsseite, jedoch ist die Anzahl der Kondensatoren bei dieser Variante reduziert. Die Schaltung ist daher insgesamt technisch einfacher.

Vorteilhaft ist es, wenn je einem Schaltelement eines Wechselrichters ein gleichrichtendes Element antiparallel geschaltet ist und je einem gleichrichtenden Element eines Gleichrichters ein Schaltelement antiparallel geschaltet ist. Der DC/DC-Wandler kann elektrische Energie dann nicht nur in eine Richtung sondern auch in die entgegengesetzte Richtung umwandeln und ermöglicht daher prinzipiell bidirektionalen Betrieb. Als Schaltelemente kommen zum Beispiel Bauteile aus der Leistungselektronik in Betracht, insbesondere Transistoren oder Thyristoren. Die oben genannten Umrichter, also passive Gleichrichter, aktive Gleichrichter oder aktive Wechselrichter, können somit auch in beliebiger Kombination angewendet werden, also zum Beispiel ein passiver Gleichrichter kombiniert mit einem aktiven Wechselrichter. Vorteilhaft ist es auch, wenn das Steuersignal rechteckförmig ist. Dieses Signal ist einfach zu erzeugen und eignet sich daher besonders gut für den erfindungsgemässen DC/DC-Wandler. Besonders Vorteilhaft ist dabei ein symmetrisches Rechtecksignal, also ein Rechtecksignal mit 50% Tastverhältnis. Die Anwendung anderer Signalformen, etwa Dreiecks- oder Sinusformen wird dadurch aber nicht ausgeschlossen.

Vorteilhaft ist es weiterhin, wenn die Wechselrichter und/oder die Gleichrichter parallel geschaltet sind oder parallel geschaltet werden können und zwischen den Wechselrichtern und/oder den Gleichrichtern Spulen angeordnet sind. Auf diese Weise wird es den oben beschriebenen Schwingkreisen ermöglicht, trotz der Parallelschaltung gegenphasig mit ihrer Resonanzfrequenz zu schwingen, sodass sich unter Beibehaltung der oben beschriebenen Betriebsart am gemeinsamen Anschluss der beiden Spulen die Gleichströme addieren, die Rippelströme aber subtrahieren. Auf diese Weise kann eine Kompensation des Spannungsrippels auch dann erreicht werden, wenn die Wechselrichter und/oder den Gleichrichter beidseits der Transformatoren jeweils parallel geschalten sind.

Vorteilhaft ist es bei der erwähnten Parallelschaltung, wenn die Spulen gekoppelt sind. Auf diese Weise kann die Baugröße der Spulen deutlich reduziert werden. Die beiden gekoppelten Spulen können weiterhin als Transformator aufgefasst werden beziehungsweise Bestandteil desselben sein. Wird ein Transformator vorgesehen, dann ist für die Kompensation des Spannungsrippels vorteilhaft nur ein Bauteil anstelle von zwei Bauteilen nötig. Weiterhin ergeben sich durch die Verwendung des Transformators gegenüber gesonderten Spulen energetische Vorteile. Bei einer weiteren vorteilhaften Variante wird für diesen Zweck ein Spartransformator vorgesehen.

Vorteilhaft ist es schliesslich, wenn der AC/DC-Wandler durch Kombination eines Gleichrichters mit einem antiparallelen Wechselrichter und umgekehrt (in diesem Fall auch bei der AC/DC-Stufe) für bidirektionalen Betrieb vorgesehen wird. Dieser kann beispielsweise optimal im Solarstrombereich eingesetzt werden, indem bei Sonnenlicht und Gleichstromüberschuss elektrische Energie einerseits in Batterien gespeichert werden kann, andererseits aber auch ins Wechselstromnetz geliefert werden kann. Tritt dann bei gleichzeitigem Wechselstrombedarf Dunkelheit ein, kann einerseits Wechselstrom aus dem Netz bezogen werden (sofern das Netz lieferfähig ist) und andererseits kann Strom aus den Batterien in Wechselstrom umgewandelt werden und somit die Anlage als Wechselspannungsquelle dienen. Im Weitern kann ein (nicht zum Fahren benutztes) Elektrofahrzeug mit seiner Batterie dementsprechend als Leistungspuffer für ein Wechselstromnetz betrieben werden.

An dieser Stelle wird klargestellt, dass sich die Erfindung nicht nur auf Wandler für Batterie-Ladegeräte bezieht sondern auf Wandler allgemein. Auch beziehen sich die Batterie-Ladegeräte nicht bloss auf Anwendungen im Kraftfahrzeugbau oder in der Solartechnik sondern allgemein auf Batterie-Ladegeräte. Der Fachmann wird hier ohne Mühe die Eignung der Erfindung auch für andere Anwendungsgebiete feststellen.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: symbolisch einen erfindungsgemässen DC/DC-Wandler;
- Fig. 2: eine vereinfachte Darstellung des DC/DC-Wandlers samt dem zeitlichen Verlauf verschiedener Spannungen und Ströme;
- Fig. 3: symbolisch eine weitere Variante eines erfindungsgemässen DC/DC-Wandlers;
- Fig. 4: einen DC/DC-Wandler, bei dem die Gleichrichter parallel geschalten werden können;
- Fig. 5: den DC/DC-Wandler aus Fig. 4 nur mit gekoppelten Spulen und
- Fig. 6: eine weitere Variante eines DC/DC-Wandlers mit parallel geschalteten Gleichrichtern samt dem zeitlichen Verlauf verschiedener Spannungen und Ströme.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

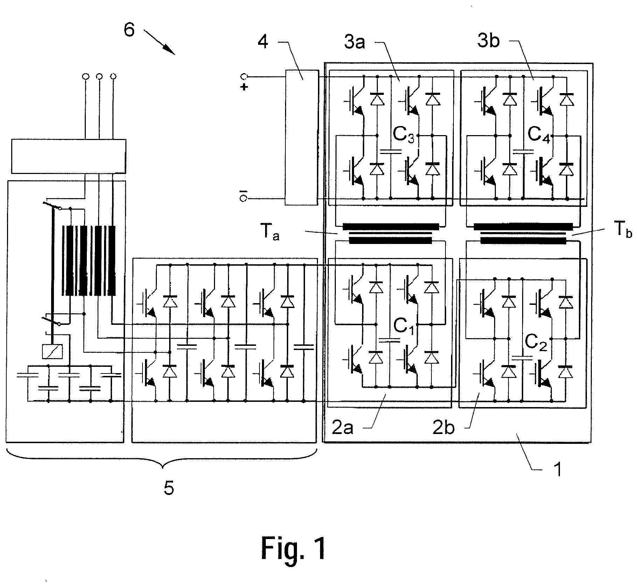

Fig. 1 zeigt einen DC/DC-Wandler 1 mit zwei in Serie geschalteten zweipoligen Wechselrichtern 2a, 2b mit je einem dazu parallel geschalteten Kondensator C₁, C₂. Die Wechselrichter 2a, 2b sind ihrerseits mit je einer Primärseite zweier Transformatoren Tₐ, T_{b} (hier mit getrennten Kernen) verbunden. Je eine Sekundärseite der Transformatoren Tₐ, T_{b} ist mit je einem zweipoliger Gleichrichter 3a, 3b und mit je einem dazu parallel geschalteten Kondensator C₃, C₄ verbunden. Die Gleichrichter 3a, 3b sind ihrerseits parallel geschaltet und über ein Filter 4 zum Anschluss einer Last vorgesehen.

Anstelle der Kondensatoren C₃ und C₄ kann ein Kondensator für beide Gleichrichter 3a, 3b vorgesehen sein. Diese Variante fällt allerdings nicht unter die Erfindung. Auch das Filter 4 ist nur optional.

In der Zeichnung sind die Wechselrichter 2a, 2b primärseitig in Serie geschaltet, die Gleichrichter 3a, 3b dagegen parallel. Es sind aber alle 4 Kombinationen von Serien- und Parallelschaltung denkbar, also zum Beispiel zwei parallele Wechselrichter 2a, 2b und zwei parallele Gleichrichter 3a, 3b. Werden auch die Wechselrichter 2a, 2b parallel geschaltet, kann anstelle der Kondensatoren C₁ und C₂ ein Kondensator für beide Wechselrichter 2a, 2b vorgesehen sein. Auch diese Variante fällt nicht unter die Erfindung, die in den Ansprüchen definiert ist.

Der DC/DC-Wandler 1 ist überdies für bidirektionalen Betrieb vorgesehen, kann also die lastseitige Ausgangsspannung, beziehungsweise bei umgekehrtem Betrieb die Zwischenkreisspannung auf ein beliebiges Niveau setzen. Dazu ist jeweils ein Wechselrichter 2a, 2b mit einer antiparallelen Gleichrichterstufe und jeweils ein Gleichrichter 3a, 3b mit einer antiparallelen Wechselrichterstufe ausgestattet. Dies ist für die Funktion des DC/DC-Wandlers zwar vorteilhaft aber keinesfalls zwingend.

In der Fig. 1 ist der DC/DC-Wandler 1 versorgungsseitig an eine AC/DC-Stufe 5 angeschlossen und bildet mit diesem einen AC/DC-Wandler 6. Der AC/DC-Wandler 6 kann beispielsweise zur Stromversorgung gleichstrombetriebener Geräte am Stromnetz verwendet werden. Dazu zählen alle Arten elektronischer Geräte oder auch Gleichstrommaschinen. Schliesslich kann der AC/DC-Wandler 6 zum Laden von Batterien, insbesondere einer Batterie eines Elektroautos verwendet werden. Die AC/DC-Stufe 5 ist für die Erfindung optional zu sehen.

Die AC/DC-Stufe 5 ist insofern von besonderer Bauart, als an einen Umrichter versorgungsseitig oder netzseitig drei gleichsinnig gekoppelte Spulen angeschlossen sind, wobei eine der Spulen durch zwei Teilspulen gebildet wird. Ein Schalter (zweipoliges Relais) verbindet die Teilspulen so, dass sie bei dreiphasigem Netzanschluss parallel und bei einphasigem Betrieb in Serie geschaltet sind, wobei der bei einphasigem Betrieb "übrig gebliebene" Anschluss am dreiphasigen Umrichter über die in Serie geschalteten Teilspulen und einen Kondensator mit dem Fusspunkt des Umrichters verbunden werden. Der Kondensator ist in diesem Beispiel aus fünf parallelen Teilkondensatoren gebildet.

Abschliessend wird angemerkt, dass obwohl in der Fig. 1 nur zwei Transformatoren Tₐ und T_{b} mit daran angeschlossenen Umrichtern gezeigt sind, das erfinderische Konzept auch auf mehrere Transformatoren Tₐ und T_{b} mit daran angeschlossenen Umrichtern ausgeweitet werden kann.

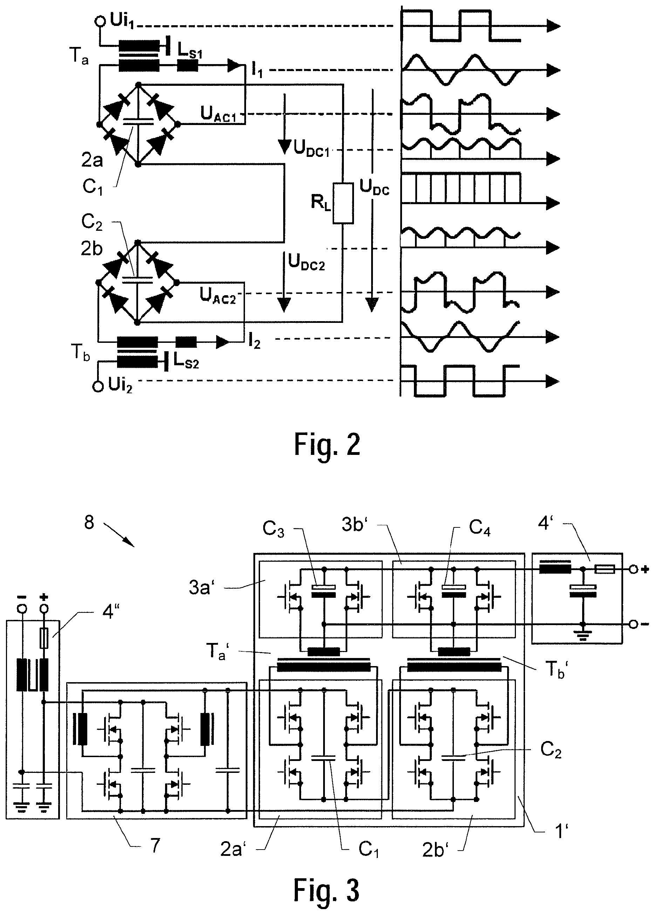

Die Funktion des in der Fig. 1 dargestellten DC/DC-Wandlers wird nun anhand der Fig. 2 erläutert, welche eine vereinfachte Darstellung dieser Schaltung zeigt. Um auch die Funktionsweise des bidirektionalen Betriebs, welcher mit dem dargestellten DC/DC-Wandler möglich ist, prinzipiell darzustellen, erfolgt der Energiefluss in der Fig. 2 von einer (in der Fig. 1 nicht dargestellten, am Filter 4 angeschlossenen) Batterie zum Wechselstromnetz.

Die Fig. 2 zeigt die beiden Transformatoren Tₐ und T_{b} und die Spannungen Uᵢ₁ und Uᵢ₂, die von den batterieseitigen Wechselrichterstufen (im Folgenden wie die batterieseitigen Gleichrichter mit 3a und 3b bezeichnet) an die Transformatoren Tₐ und T_{b} geliefert werden. Weiterhin zeigt die Fig. 2 die last- beziehungsweise netzseitigen Gleichrichterstufen (im Folgenden wie die netzseitigen Wechselrichter mit 2a und 2b bezeichnet), welche sekundärseitig an die Transformatoren Tₐ und T_{b} angeschlossen und hier als einfache Vollwegbrückengleichrichter mit den Glättungskondensatoren C₁ und C₂ ausgeführt sind. Zusätzlich sind die zeitlichen Verläufe der Spannungen Uᵢ₁ und Uᵢ₂ von den batterieseitigen Wechselrichterstufen 3a und 3b, die Ströme I₁ und I₂ durch die und die Spannungen U_{AC1} und U_{AC2} an den Sekundärwicklungen der Transformatoren Tₐ und T_{b}, die gleichgerichteten Spannungen U_{DC1} und U_{DC2} sowie deren Summenspannung U_{DC} dargestellt.

Die beiden Wechselrichterstufen 3a, 3b werden frequenzsynchron aber um 90° versetzt mit symmetrischer Rechteck-Spannung betrieben. Wenn mehr als zwei Transformatoren Tₐ und T_{b} mit daran angeschlossenen Umrichtern verwendet werden, dann ist die Phasenverschiebung entsprechend anzupassen. Dementsprechend ist es besonders vorteilhaft, wenn n Transformatoren mit Signalen angesteuert werden, die jeweils um 180°/n zueinander phasenversetzt sind.

Die Streuinduktivitäten L_{S1}, L_{S2} der Transformatoren Tₐ und T_{b} bilden mit den Kondensatoren C₁ und C₂ jeweils einen Schwingkreis. Ist dessen Resonanzfrequenz gerade doppelt so gross wie die Taktfrequenz, so ergeben sich an C₁ und C₂ der Gleichspannung überlagerte sinusförmige Wechselspannungen, welche um 180° phasenverschoben sind. Diese phasenverschobenen Wechselspannungen kompensieren sich durch die Serienschaltung der Gleichrichter 2a, 2b womit sich lastseitig eine praktisch rippelfreie Gleichspannung ergibt.

Durch den resonanten Betrieb wird ausserdem erreicht, dass die Transistoren der Wechselrichterstufe 3a und 3b (im gezeigten Beispiel MOSFETs) praktisch stromlos ein- und ausgeschaltet werden, was Verluste reduziert und HF-Störungen weitgehend vermeidet. Durch die moderate Stromänderungsrate in den Trafowicklungen werden parasitäre Verlust-Effekte (Wirbelströme, Skin- und Proximity-Effekt o.dgl.) ebenfalls reduziert.

Im gezeigten Beispiel wird davon ausgegangen, dass die Batteriespannung niedriger ist als die Netz- beziehungsweise Zwischenkreisspannung. Unter dieser Voraussetzung ergeben sich einige Vorteile der gezeigten Schaltung. Weil die Resonanzkondensatoren C₁ und C₂ auf der Seite der höheren Spannung (also hier der Netzseite) angeordnet sind, sind sie verlustärmer und weisen eine höhere Energiedichte auf. Weiterhin ermöglicht die hochspannungsseitige Serienschaltung der beiden Wandler den Einsatz von Schaltern (hier im speziellen Fall Dioden) mit geringeren Verlusten.

Abschliessend wird angemerkt, dass die in der Fig. 1 gezeigte AC/DC-Stufe 5 zwar vorteilhaft aber keinesfalls zwingend für die Erfindung ist. In Betracht kommen selbstverständlich auch andere AC/DC-Stufen, welche prinzipiell in der Lage sind eine (gegebenenfalls rippel-behaftete) Gleichspannung bereitzustellen. Weiterhin wird festgehalten dass, wenn der AC/DC-Wandler 6 für bidirektionalen Betrieb ausgelegt ist, so wie dies in der Fig. 1 dargestellt ist, der AC/DC-Wandler 6 selbstverständlich auch als DC/AC-Wandler in allen für diese Gerätegruppe in Frage kommenden technischen Gebieten eingesetzt werden kann.

Fig. 3 zeigt eine weitere Variante der Erfindung mit einem DC/DC-Wandler 1', welcher zwei in Serie geschaltete zweipolige Wechselrichter 2a', 2b' mit je einem dazu parallel geschalteten Kondensator C₁, C₂ umfasst. Die Wechselrichter 2a', 2b' sind ihrerseits mit je einer Primärseite zweier Transformatoren Tₐ', T_{b}' (hier wiederum mit getrennten Kernen) verbunden. Je eine Sekundärseite der Transformatoren Tₐ', T_{b}' ist mit je einem Gleichrichter 3a', 3b' verbunden, welche aus je zwei parallel geschalteten Schaltern und je einem dazu parallel geschalteten Kondensator C₃, C₄ bestehen. Die Sekundärwicklungen der Transformatoren Tₐ', T_{b}' sind in diesem Beispiel geteilt ausgeführt, sodass die Gleichrichter 3a', 3b' in Mittelpunkt-Schaltung betrieben werden. Das heißt, die Schalter der Gleichrichter 3a', 3b' sind mit den Enden der Sekundärwicklung, die Kondensatoren C₃, C₄ mit der Mittelanzapfung der Transformatoren Tₐ', T_{b}' verbunden. Die Gleichrichter 3a', 3b' sind ihrerseits parallel geschaltet und über ein Filter 4' (hier ein Niederspannungsfilter) zum Anschluss einer Last vorgesehen.

In der Fig. 3 ist das Teilungsverhältnis zwischen Primärspulen und Sekundärspulen der Transformatoren Tₐ', T_{b}' durch unterschiedliche Längen derselben symbolisiert. Im gezeigten Beispiel ist das Verhältnis einer Teilspule der Sekundärwicklung zur Primärwicklung der Transformatoren Tₐ', T_{b}' 1:6 und somit das Verhältnis Sekundärwicklung zur Primärwicklung 2:6 oder 1:3. Dies ist selbstverständlich nur exemplarisch zu sehen. Natürlich sind auch andere Wicklungsverhältnisse möglich.

Anstelle einer AC/DC-Stufe ist in diesem Beispiel überdies eine DC/DC-Stufe 7 vorgesehen, die in dieser Variante als bidirektionaler Hoch-/Tiefsetzsteller ausgeführt ist. Auf diese Weise lässt sich eine konstante Ausgangsspannung über einen weiten Bereich der DC-Eingangsspannung erzeugen. Selbstverständlich sind auch andere Bauarten denkbar. Netzseitig ist schließlich ein Filter 4" angeordnet (hier ein Hochspannungsfilter). Die in Fig. 3 dargestellte Schaltung bildet somit eine DC/DC-Wandleranordnung 8.

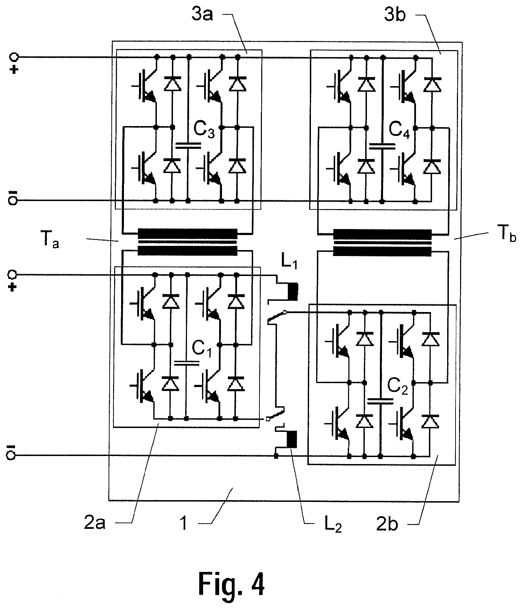

In Fig. 2 wurde dargelegt wie eine der Gleichspannung überlagerte Wechselspannung bei Serienschaltung der Gleichrichter 2a, 2b an einer Last R_{L} eliminiert, also lastseitig eine praktisch rippelfreie Gleichspannung erreicht werden kann. Fig. 4 zeigt nun eine Lösung, bei der die Gleichrichter 2a, 2b mit Hilfe eines Umschalters nicht nur in Serie, sondern auch parallel geschalten werden können. Dabei werden bei Parallelschaltung Spulen L₁ und L₂ zwischen die beiden Gleichrichter 2a und 2b geschalten, sodass sich ein schwingfähiges System ausbildet. Die Gleichstromkomponente kann die Spulen L₁ und L₂ ungehindert passieren, die Wechselstromkomponenten schwingen im Gegentakt und heben sich in Summe daher auf. Ansonsten entspricht die in Fig. 4 gezeigte Schaltung dem bereits in Fig. 1 erläuterten DC/DC-Wandler 1 und wird hier daher nicht näher beschrieben.

Prinzipiell werden die Spulen L₁ und L₂ nur dann benötigt, wenn sowohl die Umrichter 2a und 2b sowie 3a und 3b parallel geschalten werden. Wenn die Umrichter 2a, 2b, 3a, 3b auf einer Seite der Transformatoren Tₐ und T_{b} in Serie geschalten werden, dann kann auf die Spulen L₁ und L₂ verzichtet werden. Es ergibt sich somit folgendes Bild: Ohne die Zuhilfenahme von Spulen L₁ und L₂ können die Umrichter 2a, 2b, 3a, 3b beidseits der Transformatoren Tₐ und T_{b} in Serie/in Serie, in Serie/parallel oder parallel/in Serie geschalten werden. Mit den Spulen L₁ und L₂ kann auch die Schaltung parallel/parallel bewerkstelligt werden, sodass sich auch hier die Vorteile der Rippel-Kompensation und des Schaltens im Strom-Nulldurchgang ergeben.

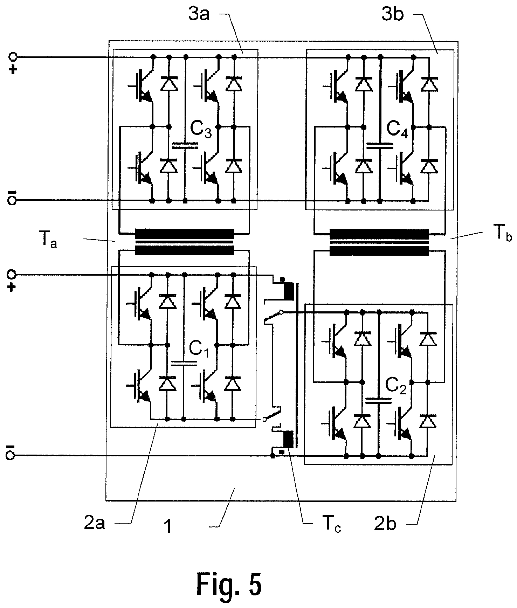

Fig. 5 zeigt nun eine weitere Variante der in Fig. 4 dargestellten Schaltung. Dabei werden die Spulen L₁ und L₂ gekoppelt. Auf diese Weise kann die Baugröße der Spulen L₁ und L₂ deutlich reduziert werden. Deren Funktion ist ansonsten aber ähnlich der in Fig. 4 benutzten Spulen L₁ und L₂. Die beiden gekoppelten Spulen L₁ und L₂ können weiterhin als Transformator T_{c} aufgefasst werden (der hier allerdings nicht zur Potentialtrennung dient). Wird ein Transformator T_{c} vorgesehen, dann ist für die Kompensation des Spannungsrippels vorteilhaft nur ein Bauteil nötig. Weiterhin ergeben sich durch die Verwendung des Transformator T_{c} gegenüber gesonderten Spulen L₁ und L₂ in der Regel geringere Verluste.

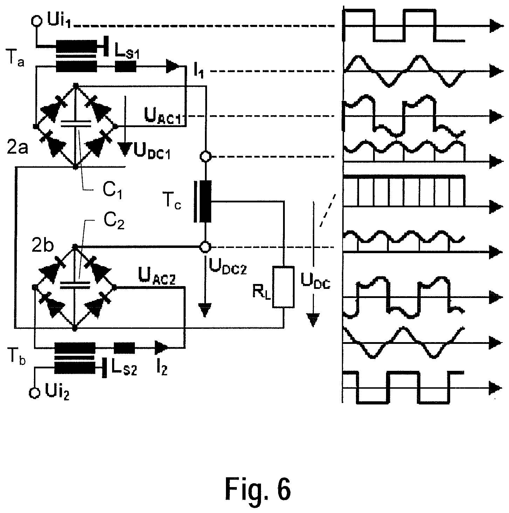

Fig. 6 zeigt nun - ähnlich wie die Fig. 2 die Spannungsverläufe für in Serie geschaltete Gleichrichter 2a und 2b zeigt - die Spannungsverläufe für parallel geschaltete Gleichrichter 2a und 2b. Bei dieser Variante ist ein Spartransformator T_{c} zwischen die beiden Gleichrichter 2a und 2b geschaltet, über dessen Mittelanzapfung der Lastwiderstand R_{L} angeschlossen ist. Anstelle des Spartransformators T_{c} können äquivalent auch zwei Spulen vorgesehen werden.

Das gezeigte Prinzip kann natürlich auch auf mehr als zwei parallel geschaltete Gleichrichter 2a und 2b erweitert werden. Dazu sind entsprechend viele Spulen beziehungsweise Transformatoren mit entsprechend vielen Wicklungen vorzusehen. Bei drei parallel geschalteten Gleichrichtern ist in Fig. 6 daher beispielsweise ein Transformator mit drei im Stern verschalteten Spulen vorzusehen, wobei die Last R_{L} im Sternpunkt angeschlossen wird. Selbstverständlich kann dieses Prinzip auch auf eine beliebige Anzahl n parallelgeschalteter Gleichrichter ausgedehnt werden. Der angesprochene Transformator hat dann n im Stern verschaltete Wicklungen.

Abschliessend wird angemerkt, dass die aufgezeigten Varianten nur einen Ausschnitt aus den vielen Möglichkeiten für einen erfindungsgemässen DC/DC-Wandler darstellen, und nicht dazu herangezogen werden dürfen, den Anwendungsbereich der Erfindung zu limitieren. Für den Fachmann sollte es ein Leichtes sein, die Erfindung basierend auf den hier dargestellten Überlegungen auf seine Bedürfnisse anzupassen.

### Bezugszeichenliste

- 1, 1': DC/DC-Wandler
- 2a, 2b, 2a', 2b': Wechselrichter
- 3a, 3b, 3a', 3b': Gleichrichter
- 4, 4', 4": Filter
- 5: AC/DC-Stufe
- 6: AC/DC-Wandler
- 7: DC/DC-Stufe
- 8: DC/DC-Wandleranordnung
- C₁, C₂, C₃, C₄: Kondensator
- L_{S1}, L_{S2}: Streuinduktivitäten
- L₁, L₂: Spulen
- R_{L}: Lastwiderstand
- Tₐ, T_{b}, Tₐ', T_{b}', T_{c}: Transformator
- U_{AC1}, U_{AC2}: Wechselspannungen
- U_{DC}, U_{DC1,} U_{DC2}: Gleichspannungen

## Patentansprüche

1. DC/DC-Wandler (1, 1'), umfassend:
- mehrere parallel oder in Serie geschaltete einphasige Vollbrücken-Wechselrichter (2a, 2b, 2a', 2b'),
- ebenso viele Transformatoren (Tₐ, T_{b}, Tₐ', T_{b}') und
- ebenso viele parallel oder in Serie geschaltete einphasige Vollbrücken-Gleichrichter (3a, 3b, 3a', 3b'), wobei
- je ein Wechselrichter (2a, 2b, 2a', 2b') mit einer Primärseite je eines Transformators (Tₐ, T_{b}, Tₐ', T_{b}') und je ein Gleichrichter (3a, 3b, 3a', 3b') mit einer Sekundärseite je eines Transformators (Tₐ, T_{b}, Tₐ', T_{b}') verbunden ist und wobei
- die Wechselrichter (2a, 2b, 2a', 2b') mit einer Steuerung verbunden sind, welche zur frequenzsynchronen und um 180°/n phasenversetzten Ansteuerung der Wechselrichter (2a, 2b, 2a', 2b') mit Hilfe eines Steuersignals vorgesehen ist, wobei n die Anzahl der Transformatoren (Tₐ, T_{b}, Tₐ', T_{b}') angibt,
**dadurch gekennzeichnet, dass**
Streuinduktivitäten (L_{S1}, L_{S2}) der Transformatoren (Tₐ, T_{b}, Tₐ', T_{b}') mit Kondensatoren (C₁, C₂) der Wechselrichter (2a, 2b, 2a', 2b') und/oder Kondensatoren (C₃, C₄) der Gleichrichter (3a, 3b, 3a', 3b') jeweils einen Schwingkreis bilden, dessen Resonanzfrequenz doppelt so gross wie eine Taktfrequenz des Steuersignals ist; und dass
je einem Wechselrichter (2a, 2b, 2a', 2b') je einer der Kondensatoren (C₁, C₂) und/oder je einem Gleichrichter (3a, 3b, 3a', 3b') je einer der Kondensatoren (C₃, C₄) parallel geschaltet ist.

2. DC/DC-Wandler (1, 1') nach Anspruch 1, **dadurch gekennzeichnet, dass** die Transformatoren (Tₐ, T_{b}, Tₐ', T_{b}') getrennte Kerne aufweisen.

3. DC/DC-Wandler (1, 1') nach Anspruch 1 oder 2, **dadurch gekennzeichnet, dass** je einem Schaltelement eines Wechselrichters (2a, 2b, 2a', 2b') ein gleichrichtendes Element antiparallel geschaltet ist und je einem gleichrichtenden Element eines Gleichrichters (3a, 3b, 3a', 3b') ein Schaltelement antiparallel geschaltet ist.

4. DC/DC-Wandler (1, 1')nach einem der Ansprüche 1 bis 3, **dadurch gekennzeichnet, dass** die Wechselrichter (2a, 2b, 2a', 2b') und/oder die Gleichrichter (3a, 3b, 3a', 3b') parallel geschaltet sind oder parallel geschaltet werden können und zwischen den Wechselrichtern (2a, 2b, 2a', 2b') und/oder den Gleichrichtern (3a, 3b, 3a', 3b') Spulen (L₁, L₂) angeordnet sind.

5. DC/DC-Wandler (1, 1') nach Anspruch 4, **dadurch gekennzeichnet, dass** die Spulen (L₁, L₂) gekoppelt sind.

6. AC/DC-Wandler (6), **gekennzeichnet durch**,
einen DC/DC-Wandler (1, 1') nach einem der Ansprüche 1 bis 5 und eine mit der Versorgungsseite des DC/DC-Wandlers (1, 1') verbundene AC/DC-Stufe (5).

## Claims

1. A DC/DC converter (1, 1') comprising:
- multiple single-phase full bridge inverters (2a, 2b, 2a', 2b') connected in parallel or in series
- just as many transformers (Tₐ, T_{b}, Tₐ', T_{b}'), and
- just as many single-phase full bridge rectifiers (3a, 3b, 3a', 3b') connected in parallel or in series, wherein
- a respective inverter (2a, 2b, 2a', 2b') is connected to a primary side of a respective transformer (Tₐ, T_{b}, Tₐ', T_{b}') and a respective rectifier (3a, 3b, 3a', 3b') is connected to a secondary side of a respective transformer (Tₐ, T_{b}, Tₐ', T_{b}'), and wherein
- the inverters (2a, 2b, 2a', 2b') are connected to a controller, which is provided for frequency-synchronous control of the inverters (2a, 2b, 2a', 2b'), said control is phase shifted by 180°/ n with the aid of a control signal, where n indicates the number of transformers (Tₐ, T_{b}, Tₐ', T_{b}'),
**characterized in that**
leakage inductances (Lₛ₁, Lₛ₂) of the transformers (Tₐ, T_{b}, Tₐ', T_{b}') with capacitors (C₁, C₂) of the inverters (2a, 2b, 2a', 2b') and/or capacitors (C₃, C₄) of the rectifiers (3a, 3b, 3a', 3b') form a resonant circuit in each case, whose resonance frequency is twice as large as a clock frequency of the control signal; and that
a respective inverter (2a, 2b, 2a', 2b') is connected in parallel to a respective capacitor (C₁, C₂) and/or a respective rectifier (3a, 3b, 3a', 3b') is connected in parallel to a respective capacitor (C₃, C₄).

2. The DC/DC converter (1, 1') according to claim 1, **characterized in that** the transformers (Tₐ, T_{b}, Tₐ', T_{b}') have separate cores.

3. The DC/DC converter (1, 1') according to claim 1 or 2, **characterized in that** a respective switching element of an inverter (2a, 2b, 2a', 2b') is connected in anti-parallel to a rectifying element, and a respective rectifying element of a rectifier (3a, 3b, 3a', 3b') is connected in anti-parallel to a switching element.

4. The DC/DC converter (1, 1') according to one of claims 1 to 3, **characterized in that** the inverters (2a, 2b, 2a', 2b') and/or the rectifiers (3a, 3b, 3a', 3b') are connected in parallel or can be connected in parallel, and coils (L₁, L₂) are arranged between the inverters (2a, 2b, 2a', 2b') and/or the rectifiers (3a, 3b, 3a', 3b').

5. The DC/DC converter (1, 1') according to claim 4, **characterized in that** the coils (L₁, L₂) are coupled.

6. An AC/DC converter (6) **characterized by** a DC/DC converter (1, 1') according to one of claims 1 to 5, and an AC/DC stage (5) connected to the supply side of the DC/DC converter (1, 1').

## Revendications

1. Convertisseur CC/CC (1, 1'), comprenant :
- plusieurs onduleurs en ponts complets (2a, 2b, 2a', 2b') monophasés, montés en parallèle ou en série,
- exactement le même nombre de transformateurs (Tₐ, T_{b}, Tₐ', T_{b}') et
- exactement le même nombre de redresseurs en ponts complets (3a, 3b, 3a', 3b'), montés en parallèle ou en série,
- chaque fois un onduleur (2a, 2b, 2a', 2b') étant relié avec un côté primaire de chaque fois un transformateur (Tₐ, T_{b}, Tₐ', T_{b}') et chaque fois un redresseur (3a, 3b, 3a', 3b') étant relié avec un côté secondaire de chaque fois un transformateur (Tₐ, T_{b}, Tₐ', T_{b}') et
- les onduleurs (2a, 2b, 2a', 2b') étant reliés avec un système de commande, lequel est prévu pour l'activation en synchronisme de fréquence et avec un décalage de phase de 180°/n des onduleurs (2a, 2b, 2a', 2b') à l'aide d'un signal de commande, n indiquant le nombre de transformateurs (Tₐ, T_{b}, Tₐ', T_{b}'),
**caractérisé en ce que**
des inductances de fuite (Lₛ₁, Lₛ₂) des transformateurs (Tₐ, T_{b}, Tₐ', T_{b}') forment avec des condensateurs (C₁, C₂) des onduleurs (2a, 2b, 2a', 2b') et/ou des condensateurs (C₃, C₄) des redresseurs (3a, 3b, 3a', 3b') chaque fois un circuit résonant, dont la fréquence de résonance correspond au double d'une fréquence d'horloge du signal de commande ; et **en ce**
**qu'**à la parallèle de chaque fois un onduleur (2a, 2b, 2a', 2b') est monté chaque fois l'un des condensateurs (C₁, C₂) et/ou à la parallèle de chaque fois un redresseur (3a, 3b, 3a', 3b') est monté chaque fois l'un des condensateurs (C₃, C₄).

2. Convertisseur CC/CC (1, 1') selon la revendication 1, **caractérisé en ce que** les transformateurs (Tₐ, T_{b}, Tₐ', T_{b}') comportent des noyaux séparés.

3. Convertisseur CC/CC (1, 1') selon la revendication 1 ou 2, **caractérisé en ce qu'**à l'antiparallèle de chaque fois un élément de commutation d'un onduleur (2a, 2b, 2a', 2b') est monté un élément redresseur et qu'à l'antiparallèle de chaque fois un élément redresseur d'un redresseur (3a, 3b, 3a', 3b') est monté un élément de commutation.

4. Convertisseur CC/CC (1, 1') selon l'une quelconque des revendications 1 à 3, **caractérisé en ce que** les onduleurs (2a, 2b, 2a', 2b') et/ou les redresseurs (3a, 3b, 3a', 3b') sont montés en parallèle ou peuvent être montés en parallèle et entre les onduleurs (2a, 2b, 2a', 2b') et/ou les redresseurs (3a, 3b, 3a', 3b') sont placées des bobines (L₁, L₂).

5. Convertisseur CC/CC (1, 1') selon la revendication 4, **caractérisé en ce que** les bobines (L₁, L₂) sont couplées.

6. Convertisseur CA/CC (6), **caractérisé par** un convertisseur CC/CC (1, 1') selon l'une quelconque des revendications 1 à 5 et une étape CA/CC (5) connectée avec le côté alimentation du convertisseur CC/CC (1, 1').
